# DEMANDE DE BREVET EUROPEEN

(11) **EP 1 608 200 A1**
(43) Date de publication de la demande: **21.12.2005**
(21) Numéro de dépôt: 05300478.4
(22) Date de dépôt: 15.06.2005
(51) Int. Cl.: H04Q 9/00

(54) **Procédé de lecture de compteurs par radiofréquence**

(30) Priorité: 16.06.2004 FR 0451281
(71) Demandeur: Actaris SAS, 92100 Boulogne Billancourt (FR)
(72) Inventeur: Kressin, Thomas, 69840 Julienas (FR)
(74) Mandataire: Lenne, Laurence

(57) **Abrégé**

L'invention a pour objet un procédé de lecture à distance d'un ensemble de compteurs ayant chacun une identification et une interface émetteur-récepteur radio pouvant communiquer avec un ordinateur.

Le procédé est caractérisé en ce qu'une information géographique relative à chaque compteur est préalablement déterminée et enregistrée dans ledit ordinateur et la lecture de tous les compteurs est effectuée sous contrôle de l'ordinateur et pilotée uniquement par ledit ordinateur, lequel enregistre dans une mémoire, pendant ladite lecture, les compteurs ayant communiqués avec l'ordinateur avec succès et ceux qui ont été défaillants car ne pouvant pas communiquer avec ledit ordinateur, et pour chaque compteur défaillant l'ordinateur recherche dans ladite mémoire au moins un compteur ayant communiqué avec l'ordinateur avec succès, en tenant compte de ladite information géographique de ce compteur, et lui ordonne de servir de relais de communication entre l'ordinateur et le compteur défaillant et, si la communication est établie, l'ordinateur enregistre et associe dans ladite mémoire l'identité du compteur relais et du compteur défaillant.

## Description

La présente invention concerne un procédé de lecture à distance par radiofréquence de compteurs d'eau, d'énergie thermique, de gaz ou d'électricité qui peuvent être installés chez des particuliers dans des appartements ou des maisons individuelles ou dans des locaux industriels.

La lecture à distance des compteurs offre de nombreux avantages parmi lesquels on peut citer le suivi régulier des consommations par la compagnie distributrice de l'eau, de l'énergie thermique, du gaz ou de l'électricité, la présence non nécessaire des consommateurs à leurs domiciles pour le relevé de la consommation enregistrée au compteur et la possibilité de relever la consommation des compteurs sans intervention sur le terrain dans des endroits difficiles d'accès ou des quartiers dangereux. La lecture à distance tend donc à se généraliser.

Dans ce but, les compteurs sont équipés de modules communicants constitués principalement d'un émetteur radio et parfois d'un récepteur radio, chaque module formant une interface communicante entre le compteur et un terminal qui peut être un ordinateur central situé dans les locaux de l'opérateur ou un terminal portable. Lorsque le module n'est qu'émetteur (système unidirectionnel), il émet ses données vers un récepteur périodiquement, plusieurs fois par jour ou par minute. Lorsque le module est à la fois émetteur et récepteur, il n'envoie les données de consommation qu'après avoir reçu un signal de commande. Ce signal peut être général, destiné à rendre actif ou "réveiller" ("wake up signal" en anglais) un groupe de compteurs situés à proximité les uns des autres (type intermédiaire), soit être un signal spécifique qui s'adresse à un module en particulier (système bidirectionnel). Dans ce dernier cas, le module comporte une adresse unique et il peut prendre l'initiative de communiquer avec le récepteur (en cas d'erreurs de communication par exemple) ou être reprogrammé à distance.

Il est d'usage de classer les méthodes de lecture à distance en trois catégories. Selon une première catégorie, la lecture est effectuée par un releveur à l'aide d'un terminal portable, tel qu'un ordinateur portable, équipé d'un modem radio. Le releveur se déplace à pieds (d'où la dénomination "walk by" en anglais) et quand il passe à proximité d'un compteur, il envoie un signal ordonnant à ce compteur d'envoyer ses données. Pour ne pas perdre de temps et pour n'oublier aucun compteur, il est important que le logiciel chargé dans le terminal portable indique avec précision le chemin que doit suivre chaque releveur. Les modules sont principalement bidirectionnels ou du type intermédiaire.

Selon une deuxième catégorie, le releveur est motorisé (d'où la dénomination "drive by" en anglais) et est équipé d'un ordinateur embarqué. La route suivie par le releveur est indiquée par le logiciel chargé dans l'ordinateur et les compteurs sont lus automatiquement à l'approche du releveur. Les modules sont principalement unidirectionnels ou du type intermédiaire.

Selon une troisième catégorie, les compteurs d'un site particulier (un groupe d'immeubles par exemple) sont organisés en réseau communiquant avec un ordinateur central situé dans les bureaux de l'opérateur (catégorie appelée "fixed network" en anglais). Les compteurs ne communiquent généralement pas directement avec cet ordinateur mais par l'intermédiaire de concentrateurs, chacun enregistrant périodiquement les données de consommation d'un groupe de compteurs. Les concentrateurs communiquent ensuite avec l'ordinateur central pour transmettre les données des compteurs. Alternativement, les concentrateurs peuvent être connectés à un même modem, au pied d'un immeuble par exemple, ce modem communiquant avec l'ordinateur. Ce modem ou les concentrateurs peuvent aussi être lus par un ordinateur portable. Le réseau est généralement complexe, souvent constitué d'une ligne filaire (téléphonique ou fibres optiques) reliant l'ordinateur au modem et de liaisons radio entre le modem et les concentrateurs et entre les concentrateurs et les compteurs. Les modules des compteurs sont typiquement unidirectionnels ou de type intermédiaire.

Un opérateur commence souvent par un système de lecture à distance selon lequel les compteurs sont lus par un releveur qui marche à pieds. Puis lorsque le nombre de compteurs augmente, les distances à parcourir s'allongent et l'opérateur passe alors à un système de lecture où le releveur est motorisé. Le nombre de compteurs augmentant encore, l'opérateur souhaite souvent alors effectuer la lecture des compteurs à l'aide d'un réseau fixe. Cependant, la transformation d'un système à un autre n'est pas aisée. Tout d'abord, les modules communicants ne sont pas toujours adaptés au nouveau système choisi et il peut être nécessaire de les changer (par exemple changer des modules unidirectionnels en modules bidirectionnels). S'il s'agit de faire évoluer le système vers un réseau fixe, il est nécessaire d'installer des concentrateurs. Tous ces changements nécessitent de se rendre sur le terrain, de modifier chaque compteur par exemple, ce qui prend beaucoup de temps et coûte cher. De plus, le logiciel doit être changé, aussi bien celui installé dans le terminal portable ou l'ordinateur embarqué ou l'ordinateur central installé dans les bureaux de l'opérateur que le logiciel chargé dans les concentrateurs et les modules communicants. Lorsque l'installation est terminée, le logiciel doit être testé pour s'assurer qu'il n'y a pas de défauts. Trouver les emplacements des nouveaux concentrateurs qui conviennent pour les communications radio n'est pas toujours aisé. Ces changements sont donc souvent difficiles, prennent beaucoup de temps et nécessitent du personnel spécialisé.

De plus, si on ajoute des compteurs dans un système déjà existant, les mêmes problèmes se posent. Il faut modifier les logiciels pour tenir compte du nouvel ordre de lecture des compteurs et de la route suivie par le releveur et ajouter du matériel, des nouveaux concentrateurs par exemple.

Egalement, la qualité de la communication entre divers éléments (compteurs, concentrateurs, ordinateurs portables) peut se détériorer pour diverses raisons. Par exemple de nouvelles constructions peuvent être faites qui perturbent la propagation des ondes radio ou, plus simplement, un meuble ou un appareil électroménager peut être déplacé dans un appartement. C'est la raison pour laquelle les systèmes existants sont conçus avec des redondances, en installant plus de concentrateurs que nécessaire, afin d'espérer pouvoir continuer à lire les compteurs même en cas de perturbations des ondes radio. Cependant, les redondances entraînent un coût supplémentaire, sans compter les risques de pannes qui augmentent avec le nombre de composants du système de lecture.

La présente invention propose un procédé de lecture à distance de compteurs par ondes radio qui facilite le passage d'un système de lecture à un autre système sans avoir à intervenir sur le terrain pour modifier ou reprogrammer les compteurs ou pour installer des concentrateurs. De plus, le procédé selon l'invention facilite l'installation et la maintenance d'un réseau et diminue les coûts d'installation. En effet, l'installation du réseau ou le remplacement d'un composant peut être fait par du personnel non spécialisé car une programmation ou une reprogrammation du logiciel sur le site d'installation des compteurs n'est pas nécessaire. Egalement, les systèmes de lecture utilisant le procédé de la présente invention sont autoadaptifs et peuvent être conçus sans redondances ou avec peu de redondances comparées aux systèmes existants. L'utilisation de concentrateurs n'est pas nécessaire ou leur nombre réduit à un minimum.

Selon la présente invention, chaque compteur est équipé d'un module ou une interface de communication radio émetteur-récepteur qui lui permet de communiquer de façon bidirectionnelle. Ces modules sont avantageusement identiques, ce qui permet de réduire les coûts de fabrication et de maintenance. Ils comportent chacun une identification propre à chaque module, une adresse par exemple. Une information géographique relative à chacun des compteurs à lire est ajoutée dans le logiciel pilotant la lecture des compteurs, ce logiciel se trouvant dans un ordinateur central situé dans les locaux de l'opérateur ou dans un ordinateur portable qu'utilise le releveur motorisé ou se déplaçant à pieds. Une identification et une information géographique sont donc associées à chaque compteur. Chaque compteur peut être utilisé comme relais pour lire un compteur qui ne peut pas être lu directement par l'ordinateur, lequel peut utiliser un ou plusieurs compteurs comme relais. On augmente ainsi la distance de lecture par rapport à la position de l'ordinateur.

De façon plus précise, la présente invention propose un procédé de lecture à distance d'un ensemble de compteurs ayant chacun une identification et une interface émetteur-récepteur radio pouvant communiquer avec un ordinateur, le procédé étant caractérisé en ce qu'une information géographique relative à chaque compteur est préalablement déterminée et enregistrée dans ledit ordinateur et la lecture de tous les compteurs est effectuée sous contrôle dudit ordinateur et pilotée uniquement par ledit ordinateur, lequel enregistre dans une mémoire, pendant ladite lecture, les compteurs ayant communiqués avec l'ordinateur avec succès et ceux qui ont été défaillants car ne pouvant pas communiquer avec ledit ordinateur, et pour chaque compteur défaillant l'ordinateur recherche dans ladite mémoire au moins un compteur ayant communiqué avec l'ordinateur avec succès, en tenant compte de ladite information géographique de ce compteur, et lui ordonne de servir de relais de communication entre l'ordinateur et le compteur défaillant et, si la communication est établie, l'ordinateur enregistre et associe dans ladite mémoire l'identité du compteur relais et du compteur défaillant.

Selon un mode de réalisation avantageux :
- une première tentative de lecture directe de tous les compteurs dudit ensemble est effectuée dans un ordre qui tient compte de l'information géographique de chaque compteur, les compteurs lus étant enregistrés dans ledit ordinateur dans la liste RM0 des compteurs lus sans relais et les compteurs non lus étant enregistrés dans la liste URM0 des compteurs non lus;
- une deuxième tentative de lecture desdits compteurs enregistrés dans la liste URM0 est effectuée par ledit ordinateur en utilisant , pour chacun d'eux, un relais constitué par un compteur enregistré dans la liste des compteurs lus RM0 en tenant compte des informations géographiques des compteurs, ledit ordinateur enregistrant les compteurs lus avec un relais dans la liste RM1 R ainsi que pour chacun l'identification du compteur relais, les autres compteurs étant enregistrés dans la liste URM1R des compteurs non lus avec un relais;
- si un ou plusieurs compteurs sont enregistrés dans la liste URM1R des compteurs non lus avec un relais, une troisième tentative de lire les compteurs de la liste URM1R est effectuée en utilisant, pour chacun d'eux, un relais constitué par un compteur de la liste RM1R des compteurs lus avec un relais en tenant compte des informations géographiques des compteurs, ledit ordinateur enregistrant les compteurs ainsi lus avec deux relais dans la liste RM2R ainsi que pour chacun d'eux l'identification des compteurs relais, les autres étant enregistrés dans la liste URM2R des compteurs non lus avec deux relais,
la lecture des compteurs non lus se poursuivant en utilisant comme relais, pour la xième tentative de lecture, les compteurs ayant été lus à la tentative précédente (x-1), ces compteurs étant classés dans la liste RM(x-2)R des compteurs lus à l'aide de (x-2) relais.

Ladite information géographique relative à un compteur peut être la position géographique de ce compteur par rapport aux autres compteurs, par rapport à un point fixe qui peut être ledit ordinateur central ou l'un des points d'entrée dans le réseau formé par ledit ensemble des compteurs ou qui peut être un point mobile constitué par l'emplacement de l'ordinateur portable au moment de la lecture. L'information géographique peut aussi être la position géographique définie, par satellite par exemple, par la longitude et la latitude. Les informations géographiques peuvent aussi être constituées par une grille de lecture des compteurs, tracée en fonction de la proximité des compteurs les uns par rapport aux autres.

Pour chaque compteur défaillant, ledit ordinateur recherche dans ladite mémoire un relais parmi les compteurs dudit ensemble ayant communiqués avec succès, en commençant de préférence par le compteur le plus proche géographiquement dudit compteur défaillant et, si la communication ne peut pas être établie, l'ordinateur recherche un relais parmi lesdits compteurs ayant communiqués avec succès en s'éloignant progressivement dudit compteur défaillant.

Il est également avantageux de rechercher, parmi les compteurs ayant communiqués avec succès, ceux dont le signal de communication avec l'ordinateur est suffisamment intense, par exemple d'intensité supérieure à un seuil prédéterminé.

D'autres avantages et caractéristiques de l'invention apparaîtront au cours de la description qui suit de plusieurs modes de réalisation, donnés à titre d'exemples non limitatifs, en référence aux dessins annexés et sur lesquels :
- la figure 1 illustre la lecture d'un ensemble bidimensionnel de quinze compteurs;
- la figure 2 est un diagramme reproduisant les étapes du procédé pour la lecture de l'ensemble de compteurs de la figure1;
- la figure 3 montre un releveur de compteurs à l'étage d'un immeuble;
- la figure 4 représente schématiquement un système de lecture à distance de compteurs.

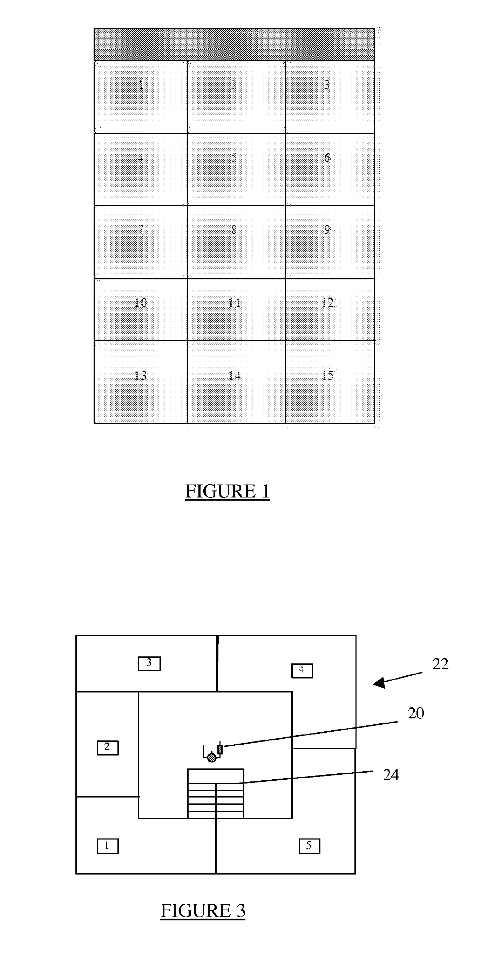

La figure 1 illustre un mode de réalisation de l'invention concernant la lecture à distance, par un releveur se déplaçant à pieds, de quinze appartements d'un immeuble, référencés de 1 à 15. Chaque appartement est équipé d'au moins un compteur d'eau (eau froide et/ou chaude), d'énergie thermique, de gaz ou d'électricité que l'on veut lire sans pénétrer dans les appartements, chaque compteur étant équipé d'un module communicant bidirectionnel. L'habitude est de commencer la lecture par l'étage le plus élevé et de poursuivre la lecture en descendant les escaliers jusqu'au rez-de-chaussée. La lecture commence donc par le compteur n°1 et finit par le compteur n°15. L'information géographique est ici constituée par la grille de lecture des compteurs, dans l'ordre dans lequel ils sont lus. Le procédé selon l'invention peut être mis en oeuvre par les étapes suivantes :
a) On commence par lire directement tous les compteurs de 1 à 15.
b) Les compteurs dont la lecture n'a pas pu être faite sont classés dans la liste URM0 des compteurs non lus directement (pour "UnRead Meter 0 relay" en anglais). Les autres compteurs sont classés dans la liste RM0 des compteurs lus directement (pour "Read Meter 0 relay" en anglais).
c) On essaie de lire les compteurs non lus en utilisant comme relais les compteurs lus directement. Il y a alors deux solutions pour un compteur non lu.
   Soit il a déjà été lu précédemment à l'aide d'un compteur relais dont le numéro RL a été mémorisé dans une mémoire de l'ordinateur de lecture et dans ce cas la lecture est effectuée en utilisant ce compteur relais.
   Soit ce relais ne permet plus la communication radio ou c'est la première fois que ce compteur est lu à distance. Dans ces derniers cas, on commence par utiliser la différence R0 entre le numéro du compteur qui vient d'être lu avec un compteur relais et le numéro de ce compteur relais. Par exemple, si le compteur n° 4 a pu être lu avec le compteur n° 6 comme relais, R0 est égal à 6-4=2. Pour le compteur suivant qui ne peut pas être lu, par exemple le compteur n°7, on essaie alors d'utiliser comme relais le numéro de compteur 7+2 = 9.
   Si la tentative échoue, alors on effectue la lecture d'un compteur X selon le processus itératif suivant, en désignant par X le numéro du compteur non lu de la liste URM0 et R le numéro d'un compteur lu de la liste RM0 :
   * R1+ =X+1 c'est-à-dire que l'on essaie de lire le compteur non lu n° X en utilisant comme relais le compteur ayant le numéro X+1, à condition qu'il appartienne à la liste RM0; si la lecture ne se fait pas, on passe à :

   * R1- = X-1 ; si la lecture ne se fait pas, on passe à :

   * R2+ = X+2 ; si la lecture ne se fait pas, on passe à :

   * R2- = X-2 ; si la lecture ne se fait pas, on passe à :

   * R3+ = X+3 ; si la lecture ne se fait pas, on passe à :

   * R3- = X-3 ; si la lecture ne se fait pas, on passe à :

   * ..... jusqu'à Rn± = X ± n, n désignant le dernier des compteurs lus. Si le compteur a pu être lu au cours d'une séquence précédente, il est classé dans la liste RM1R des compteurs lus avec un relais et le numéro du compteur ayant servi de relais avec succès (par exemple R3+) est mémorisé dans l'ordinateur et associé au compteur n° X pour le prochain relevé du compteur X.

   Si la lecture n'a pas pu être faite, le compteur n° X est classé dans la liste URM1R des compteurs non lus avec un relais ("UnRead Meter 1 Relay" en anglais)
d) On procède ensuite à la lecture des compteurs non lus avec un relais en essayant de prendre pour relais les compteurs de la liste RM1 R lus avec un relais. Pour cela, l'algorithme est le même qu'à la phase c) précédente, R désignant alors le numéro d'un compteur de la liste RM1R.

La lecture des compteurs non lus (compteurs défaillants) se poursuit en utilisant comme relais, pour la xième tentative de lecture, les compteurs ayant été lus à la tentative précédente (x-1), ces compteurs étant classés dans la liste RM(x-2)R des compteurs lus à l'aide de (x-2) relais (la première tentative de lecture étant la lecture directe sans relais qui correspond à x=0).

A titre d'exemple, supposons que les compteurs n° 2, 5 et 7 soient défaillants car ne pouvant pas être lus directement. Alors :
- la liste URM0 contient les numéros 2, 5 et 7;
- si le compteur n° 2 n'est pas joignable avec un relais, il est classé dans la liste URM1R;
- si le compteur n° 5 peut être lu à l'aide du compte ur relais n° 8 (donc R+3), alors la valeur R+3 est mémorisée dans l'ordinateur et associée au compteur n°5, ce dernier rentrant dans la liste RM1R;
- comme la dernière séquence utilisée avec succès est +3, il existe une bonne probabilité pour que cette séquence fonctionne au prochain essai;
- pour lire le compteur n°7, on utilise alors la séquence +3, ce qui correspond donc au compteur n° 7+3 = 10 comme relais; si ça ne fonctionne pas, on démarre alors l'algorithme de l'étape c) en commençant par R1+=X+1=7+1=8, puis R-1, puis R+2, etc. Si le compteur n°7 peut être lu, il est classé dans la liste RM1R.
- on essaie ensuite de lire le compteur n° 2 en utilisant pour relais les compteurs de la liste RM1R, donc dans l'exemple ci-dessus les compteurs n° 5 et 7.

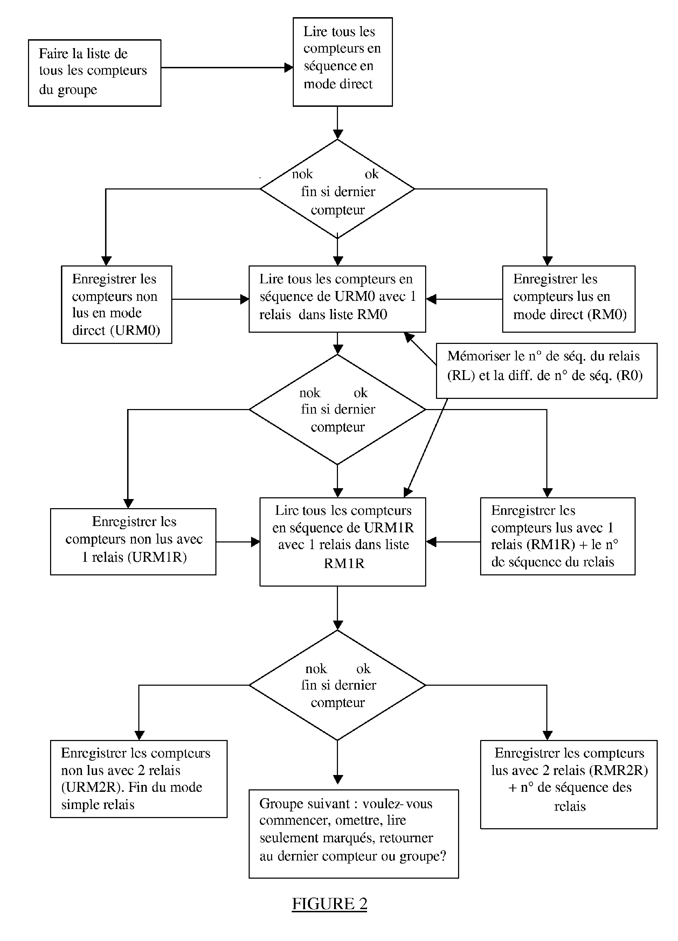

La figure 2 est un diagramme illustrant le procédé qui vient d'être décrit. La liste des compteurs d'un même ensemble est tout d'abord établie dans un ordre prédéterminé (dans l'exemple précédent, de 1 à 15). Puis les compteurs sont tous lus en séquence. Ensuite commence le processus algorithmique défini précédemment. Lorsque tous les compteurs ont été lus ou lorsque toutes les possibilités de relais ont été épuisées, on passe à la lecture du groupe de compteurs suivant en lisant tous les compteurs ou seulement certains d'entre eux (compteurs "marqués") ou on retourne au dernier compteur ou au dernier groupe de compteurs.

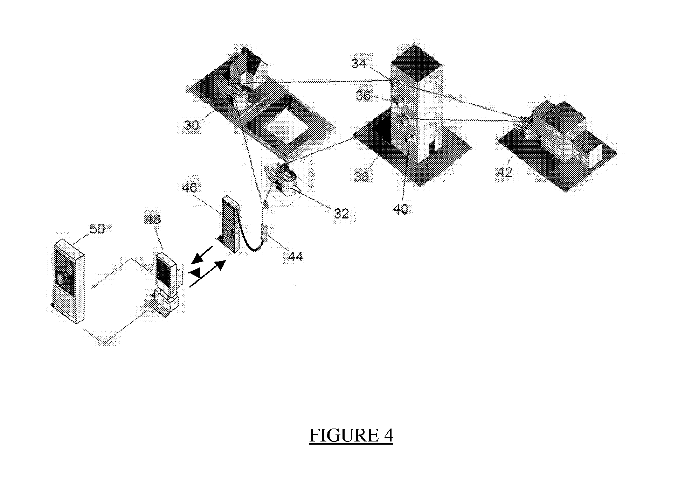

La figure 3 illustre un autre mode de mise en oeuvre d'un procédé de lecture à distance par un releveur 20 des compteurs situés dans un immeuble 22. Le releveur est muni d'un ordinateur portable contenant un logiciel qui pilote la lecture des compteurs. Ce logiciel a été établi en référençant les appartements de gauche à droite, de 1 à 5, le releveur se tenant le dos à l'escalier 24. L'information géographique contenu dans le logiciel est dans ce cas le numéro de l'étage suivi du numéro de l'appartement. Il est possible de compléter cette information en ajoutant la position du compteur à l'intérieur de l'appartement ou de définir la position relative des cages d'escaliers et des bâtiments les uns par rapport aux autres. Avec l'information géographique, le logiciel est capable de déterminer de façon automatique et autoadaptive le ou les meilleurs compteurs relais pour assurer la communication entre l'ordinateur portable du releveur et le compteur dont on veut lire la consommation. En règle générale, on essaie comme relais le compteur qui a pu communiquer avec l'ordinateur et qui est le plus proche du compteur défaillant, et si ça ne fonctionne pas, on s'éloigne de plus en plus du compteur défaillant. Ainsi dans l'exemple représenté sur la figure 3, en supposant que le compteur 4 soit défaillant et que les autres compteurs communiquent correctement, on choisira comme relais le compteur n ° 5, puis le n ° 3 (ou inversement le n ° 3 puis le n° 5), puis le n ° 2 et enfin le n° 1.

Selon un mode de mise en oeuvre du procédé selon lequel le releveur se déplace à bord d'un véhicule équipé d'un ordinateur embarqué effectuant la lecture des compteurs, la position géographique (longitude et latitude) est déterminée par satellite (par exemple par le système GPS ou GALILEO) au moment de l'installation des compteurs (ou des modules communicants s'ils sont ajoutés par la suite aux compteurs). La position géographique est mémorisée dans une mémoire de l'ordinateur. La position géographique de l'ordinateur embarqué est également déterminée par satellite tout au long du déplacement du véhicule, en utilisant par exemple un récepteur GPS. Cette position est transmise au logiciel de l'ordinateur. Ce dernier calcule alors la distance séparant l'ordinateur des compteurs à lire. Lorsque cette distance est inférieure à une distance prédéterminée, l'ordinateur tente de lire tous les compteurs se trouvant à une distance de l'ordinateur inférieure à cette distance prédéterminée. Si un compteur ne peut pas être lu, le logiciel de l'ordinateur essaie de trouver un compteur relais selon l'algorithme décrit précédemment, en commençant par le compteur le plus proche du compteur défaillant et, en cas d'échec, en s'éloignant progressivement du compteur défaillant. On remarque qu'en utilisant des compteurs comme relais, ladite distance prédéterminée peut être supérieure aux distances de lecture des procédés de lecture de compteurs n'utilisant pas de relais.

La figure 4 montre schématiquement un système de lecture à distance en réseau fixe ou par un releveur se déplaçant à pieds. Les compteurs représentés sont des compteurs d'eau, mais il est bien évident que le procédé de lecture serait le même avec des compteurs de gaz, d'énergie thermique ou d'électricité. Différentes installations de compteurs sont représentées : un compteur 30 pour une maison individuelle, un compteur 32 situé dans un regard, des compteurs 34, 36, 38 et 40 situés dans les appartements d'un immeuble et un compteur 42 pour un site industriel. Tous ces compteurs sont équipés de modules radio identiques communiquant avec un modem 44 qui fonctionne comme un point d'entrée ou passerelle du réseau radio. Selon un premier mode de réalisation, ce modem 44 communique avec un ordinateur central 48 situé dans les bureaux de l'opérateur (cette communication est représentée schématiquement par les deux flèches entre l'ordinateur central 48 et le modem 44). Cette communication peut être de différents types : elle peut être par exemple, et de façon non limitative, par ligne téléphonique, par câble optique, par radio ou par téléphone mobile tel que le système GSM. Selon un autre mode de réalisation, un releveur se déplaçant à pieds connecte un ordinateur portable 46 au modem 44. L'ordinateur portable contient le logiciel de lecture des compteurs, avec les informations géographiques et la séquence de lecture des compteurs. Dans ce cas, le releveur transfère dans la mémoire de l'ordinateur central 48, généralement en fin de journée, de retour au bureau, les données de consommation relevées enregistrées dans la mémoire de l'ordinateur portable 46. Le modem radio 44 comporte donc une partie radio en communication avec les compteurs et une autre partie qui dépend du type de communication avec l'ordinateur central 48 ou avec l'ordinateur portable 46. Ces deux parties de modem peuvent être séparées ou dans un même boîtier et, dans ce cas, être avantageusement intégrées sur un même circuit imprimé. L'ordinateur 48 est relié à un autre ordinateur 50 chargé d'établir les factures correspondant aux consommations relevées. Le logiciel contenant les adresses et les informations géographiques des compteurs, ainsi que la séquence de lecture des compteurs, est dans l'ordinateur central 48. Ce dernier contrôle le point d'entrée radio ou passerelle constitué(e) par le modem 44.

Le modem radio 44 constitue le point d'entrée pour la partie radio de la lecture des compteurs. Ce point est fixe et pourrait être utilisé comme point de référence pour la position géographique des compteurs.

Dans l'exemple représenté sur la figure 4, les compteurs 30, 32, 36 et 40 sont lus directement, sans relais, la communication radio fonctionnant bien entre ces compteurs et le modem 44. Par contre, les compteurs 34, 38 et 42 ne peuvent pas être lus directement. La lecture est effectuée pour le compteur 34 en prenant comme relais le compteur 30, pour le compteur 38 le compteur 32 et pour le compteur 42 soit les compteurs 34 et 30, soit les compteurs 38 et 32.

Dans le cas de la lecture de compteurs d'immeubles, la localisation géographique des compteurs par satellite ne fonctionne pas toujours (notamment à l'intérieur des cages d'escaliers). On crée alors une grille dont chaque point représente un compteur. Elle permet de localiser chaque compteur en le caractérisant par le numéro de l'appartement dans lequel le compteur est installé, ainsi que par l'étage, la cage d'escalier et le numéro de l'immeuble. Cette grille, en plusieurs dimensions, est utilisée pour déterminer le ou les compteurs relais. A titre d'exemple, le procédé de lecture pourrait être le suivant :
- commencer par lire tous les compteurs d'un groupe (le groupe étant par exemple tous les compteurs d'un immeuble);
- tous les compteurs dont la lecture a pu être effectuée peuvent servir de relais;
- ayant la position relative des compteurs (par la grille), un algorithme de détermination des relais peut être utilisé en tenant compte de la topographie de l'immeuble (par exemple, donner la préférence au compteur installé juste en dessous du compteur défaillant);
- chercher un relais situé en dessous et au dessus du compteur défaillant en utilisant son numéro d'étage avec successivement -1, -2, +1, +2. Si la communication n'a pas pu être établie, essayer le même étage mais avec le ou les appartements voisins. En cas d'échec :

- chercher un relais dans un appartement ayant comme numéro le numéro de l'appartement du compteur défaillant ±1 et ± 2. Si ça ne fonctionne toujours pas, essayer le même étage et le même appartement mais situé dans la ou les cages d'escaliers voisines de la cage d'escalier du compteur défaillant. En cas d'échec :

- chercher un relais avec les mêmes références que le compteur défaillant mais pour une grille d'un groupe de compteurs voisins (si les grilles portent des numéros successifs en suivant l'ordre des immeubles, on choisi le numéro de grille du compteur défaillant ± 1.

Comme indiqué dans le diagramme de la figure 2, un compteur lu avec un relais est ajouté dans la liste RM1 R et peut être utilisé comme relais pour les compteurs de la liste URM1R. Si un compteur, désigné par "y", a fonctionné comme relais pour un compteur défaillant, pour le compteur défaillant suivant on essaie d'abord d'utiliser ce compteur relais "y". Si ça ne fonctionne toujours pas, on essaie d'utiliser le compteur ayant fonctionné comme relais avant le compteur "y". L'identification de ces compteurs relais est mémorisée dans l'ordinateur de lecture afin de gagner du temps pour les opérations de relevé de compteurs suivantes.

De façon avantageuse, l'ordinateur sélectionne, parmi les compteurs qui ont communiqué avec succès, ceux dont le signal de communication radio est suffisamment intense pour être détecté facilement. A cette fin, l'opérateur se fixe un seuil d'intensité de signal et seuls les compteurs dont les signaux reçus ayant une intensité supérieure à ce seuil sont considérés comme pouvant être sélectionnés comme relais.

Les avantages du procédé de l'invention sont nombreux. Les distances de lecture peuvent être plus grandes, ce qui a pour conséquence que le releveur n'a plus à pénétrer dans les immeubles. De plus, le nombre de compteurs lus par jour peut être augmenté ce qui améliore la productivité. Le fait d'utiliser des modules radio identiques facilite le passage d'un système de lecture à un autre (lecture à pieds, motorisé et réseau fixe). Les coûts d'installation et de maintenance du système sont diminués du fait de la standardisation des modules radio, du contrôle du processus de lecture par l'ordinateur central ou portable lequel contient le logiciel de pilotage de la lecture des compteurs et de l'absence de concentrateurs comme dans les systèmes classiques.

## Revendications

1. Procédé de lecture à distance d'un ensemble de compteurs (30-42) ayant chacun une identification et une interface émetteur-récepteur radio pouvant communiquer avec un ordinateur (48), le procédé étant **caractérisé en ce qu'**une information géographique relative à chaque compteur est préalablement déterminée et enregistrée dans ledit ordinateur et la lecture de tous les compteurs est effectuée sous contrôle dudit ordinateur et pilotée uniquement par ledit ordinateur, lequel enregistre dans une mémoire, pendant ladite lecture, les compteurs ayant communiqués avec l'ordinateur avec succès et ceux qui ont été défaillants car ne pouvant pas communiquer avec ledit ordinateur, et pour chaque compteur défaillant (34, 38, 42) l'ordinateur recherche dans ladite mémoire au moins un compteur (30, 42) ayant communiqué avec l'ordinateur avec succès, en tenant compte de ladite information géographique de ce compteur, et lui ordonne de servir de relais de communication entre l'ordinateur et le compteur défaillant et, si la communication est établie, l'ordinateur enregistre et associe dans ladite mémoire l'identité du compteur relais et du compteur défaillant.

2. Procédé selon la revendication 1 **caractérisé en ce que** :
- une première tentative de lecture directe de tous les compteurs dudit ensemble est effectuée dans un ordre qui tient compte de l'information géographique de chaque compteur, les compteurs lus étant enregistrés dans ledit ordinateur dans la liste RM0 des compteurs lus sans relais et les compteurs non lus étant enregistrés dans la liste URM0 des compteurs non lus;
- une deuxième tentative de lecture desdits compteurs enregistrés dans la liste URM0 est effectuée par ledit ordinateur en utilisant , pour chacun d'eux, un relais constitué par un compteur enregistré dans la liste des compteurs lus RM0 en tenant compte des informations géographiques des compteurs , ledit ordinateur enregistrant les compteurs lus avec un relais dans la liste RM1R ainsi que pour chacun l'identification du compteur relais, les autres compteurs étant enregistrés dans la liste URM1R des compteurs non lus avec un relais;
- si un ou plusieurs compteurs sont enregistrés dans la liste URM1R des compteurs non lus avec un relais, une troisième tentative de lire les compteurs de la liste URM1R est effectuée en utilisant, pour chacun d'eux, un relais constitué par un compteur de la liste RM1R des compteurs lus avec un relais en tenant compte des informations géographiques des compteurs, ledit ordinateur enregistrant les compteurs ainsi lus avec deux relais dans la liste RM2R ainsi que pour chacun d'eux l'identification des compteurs relais, les autres étant enregistrés dans la liste URM2R des compteurs non lus avec deux relais;
la lecture des compteurs non lus se poursuivant en utilisant comme relais, pour la xième tentative de lecture, les compteurs ayant été lus à la tentative précédente (x-1), ces compteurs étant classés dans la liste RM(x-2)R des compteurs lus à l'aide de (x-2) relais.

3. Procédé selon l'une des revendications précédentes **caractérisé en ce que** ladite information géographique d'un compteur est constituée par sa position géographique par rapport aux autres compteurs dudit ensemble.

4. Procédé selon l'une des revendications précédentes **caractérisé en ce que** ladite information géographique est définie par rapport à un point fixe.

5. Procédé selon la revendication 4 **caractérisé en ce que** ledit ordinateur est un ordinateur central (48) situé dans les locaux de l'opérateur et ledit point fixe est constitué par ledit ordinateur central.

6. Procédé selon la revendication 4 **caractérisé en ce que** les compteurs dudit ensemble communiquent avec ledit ordinateur par l'intermédiaire d'un modem radio (44) et **en ce que** ledit modem radio constitue ledit point fixe.

7. Procédé selon l'une des revendications 1 et 2 **caractérisé en ce que** ladite information géographique d'un compteur est constituée par la longitude et la latitude de sa position géographique déterminées par un système satellite.

8. Procédé selon la revendication 7 **caractérisé en ce que** ledit ordinateur est un ordinateur portable dont la position géographique est déterminée par un système satellite, **en ce que** ledit ordinateur calcule la distance le séparant de chaque compteur et **en ce que** ledit ordinateur effectue la lecture d'un compteur lorsque la distance le séparant dudit compteur est inférieure à une distance prédéterminée.

9. Procédé selon l'une des revendications 7 et 8 **caractérisé en ce que** ledit système satellite est du type GPS ou GALILEO.

10. Procédé selon l'une des revendications 1 et 2 **caractérisé en ce que** les informations géographiques des compteurs sont constituées par une grille dont chaque point représente un compteur.

11. Procédé selon la revendication 10 **caractérisé en ce que**, pour lire un ensemble de compteurs situés dans les appartements d'au moins un immeuble, ladite grille est composée pour chaque compteur des paramètres suivants : le numéro de l'appartement, l'étage et la cage d'escaliers si l'immeuble comporte plusieurs cages d'escaliers.

12. Procédé selon la revendication 11 **caractérisé en ce que**, ledit ensemble comprenant des compteurs dans plusieurs immeubles, ladite grille comporte en outre le numéro de l'immeuble pour chacun des compteurs.

13. Procédé selon l'une des revendications précédentes **caractérisé en ce que** les compteurs étant lus en séquence, la différence de numéro de séquence entre un compteur défaillant et le compteur relais permettant audit ordinateur défaillant de communiquer avec ledit ordinateur est enregistrée en mémoire de l'ordinateur et **en ce que** ladite différence est utilisée pour déterminer le numéro de séquence du compteur relais du prochain compteur défaillant.

14. Procédé selon l'une des revendications précédentes **caractérisé en ce que**, pour chaque compteur défaillant, ledit ordinateur recherche dans ladite mémoire un relais parmi les compteurs dudit ensemble ayant communiqués avec succès, en commençant par le compteur le plus proche géographiquement dudit compteur défaillant et, si la communication ne peut pas être établie, l'ordinateur recherche un relais parmi lesdits compteurs ayant communiqués avec succès en s'éloignant progressivement dudit compteur défaillant.

15. Procédé selon la revendication 14 **caractérisé en ce que** l'ordinateur recherche parmi les compteurs ayant communiqués avec succès ceux dont le signal de communication avec l'ordinateur est d'intensité supérieure à un seuil prédéterminée.

16. Procédé selon l'une des revendications précédentes **caractérisé en ce que** la séquence de lecture d'un ensemble de compteurs comprenant l'identification des compteurs défaillants associée à l'identification des compteurs utilisés comme relais pour lesdits compteurs défaillants sont enregistrées dans ledit ordinateur et sont utilisées pour la prochaine opération de relevé des compteurs dudit ensemble, et si un ou plusieurs desdits compteurs dudit ensemble se révèle néanmoins défaillant au cours de ladite prochaine opération, le procédé défini à l'une des revendications précédentes est mis en oeuvre.
